# EUROPÄISCHE PATENTSCHRIFT

(11) **EP 4 155 282 B1**
(45) Veröffentlichungstag und Bekanntmachung des Hinweises auf die Patenterteilung: **10.04.2024**
(21) Anmeldenummer: 21208196.2
(22) Anmeldetag: 15.11.2021
(51) Int. Cl.: C04B 41/49

(54) **IMPRÄGNIERCREME, VERWENDUNG UND VERFAHREN ZUR HERSTELLUNG DER IMPRÄGNIERCREME**
IMPREGNATING CREAM, USE AND METHOD FOR PRODUCING THE IMPREGNATING CREAM
CRÈME D'IMPRÉGNATION, UTILISATION ET PROCÉDÉ DE FABRICATION DE LA CRÈME D'IMPRÉGNATION

(30) Priorität: 22.09.2021 DE 102021124578
(43) Veröffentlichungstag der Anmeldung: 29.03.2023
(73) Patentinhaber: Hechtl, Wolfgang, 84489 Burghausen (DE)
(72) Erfinder: Hechtl, Wolfgang, 84489 Burghausen (DE)
(74) Vertreter: Hoefer & Partner Patentanwälte mbB

(56) Entgegenhaltungen:
- DE-A1- 19 628 035
- DE-A1- 19 945 305

## Beschreibung

Die Erfindung betrifft eine Imprägniercreme zur Hydrophobierung von Baustoffen sowie ein Verfahren zur Herstellung derselben. Auch ist eine Verwendung einer Imprägniercreme Bestandteil der Erfindung.

Aus dem Stand der Technik sind Imprägniercremes zum Schutz von Bauwerken vor Nässe bekannt. Beispielsweise beschreibt DE 19945305 A1 eine Imprägniercreme mit einem bestimmten Silan/Siloxan-Wirkstoffgehalt, die Wasser, einen Emulgator und eine Organosiliziumverbindung enthält. Als weiteren wesentlichen Rohstoff enthält diese Imprägniercreme eine Kohlenwasserstoffkomponente, die zugesetzt wird, um den Wirkstoffgehalt der Imprägniercreme zu reduzieren, um die Imprägniercreme besser verarbeitbar zu machen. Nachteilig an Kohlenwasserstoff-haltigen Imprägniercremes ist ihre schwierige Stabilisierung aufgrund des Anteils an hydrophoben Kohlenwasserstoffen. Ferner ist aus DE 19628035 A1 eine Imprägniercreme bekannt, die alkoxylierte Silane und Aminogruppen-funktionalisierte Organopolysiloxane umfasst. Hierbei ist ein hoher Anteil an alkoxylierten Silanen und Aminogruppen-funktionalisierten Organopolysiloxanen erforderlich, die aber aufgrund ihrer Alkoxylierung bzw. Aminogruppen-Funktionalisierung wenig umweltfreundlich und anwenderfreundlich sind. Darüber hinaus sind Imprägniercremes schwieriger herzustellen, zu bevorraten und zu verarbeiten, wenn sie eine Vielzahl an Komponenten umfassen, so wie in dem vorstehenden Stand der Technik offenbart.

Es ist daher eine Aufgabe der vorliegenden Erfindung eine Imprägniercreme bereitzustellen, die sich durch eine vereinfachte Zusammensetzung auszeichnet und dabei hervorragende hydrophobierende Eigenschaften aufweist. Darüber hinaus ist es auch eine Aufgabe der vorliegenden Erfindung ein einfaches und kostengünstiges Verfahren zur Herstellung einer solchen Imprägniercreme sowie eine Verwendung der Imprägniercreme anzugeben.

Die Lösung dieser Aufgaben erfolgt durch den Gegenstand der unabhängigen Ansprüche. Vorteilhafte Weiterbildungen und Ausgestaltungen der Erfindung sind in den Unteransprüchen enthalten.

Demnach wird die Aufgabe gelöst durch eine Imprägniercreme, die Wasser, mindestens einen Emulgator und mindestens ein Polydimethylsiloxan enthält. Das Polydimethylsiloxan ist dabei ausgewählt aus Polydimethylsiloxanen der nachfolgenden Formeln, wobei n eine ganze Zahl von 20 bis 2500 ist:

HO-(SiMe₂O)ₙ-H und Me₃SiO-(SiMe₂O)ₙ-SiMe₃

Die erfindungsgemäß verwendeten Polydimethylsiloxane können jeweils einzeln oder in beliebigen Kombination eingesetzt werden. Unter entsprechenden Kombinationen sind auch solche, die sowohl Hydroxylgruppen-endständige Polydimethylsiloxane als auch Trimethylsilylgruppen-endständige Polydimethylsiloxane umfassen. Die Polydimethylsiloxane können je nach gewünschter Viskosität eingesetzt werden.

Aufgrund ihrer hydrophoben Natur sind die erfindungsgemäßen Polydimethylsiloxane einerseits gut zur Hydrophobierung von mineralischen Baustoffen geeignet, weisen aber andererseits auch eine bessere Anwenderverträglichkeit und Umweltfreundlichkeit als im Stand der Technik verwendete Siloxane auf. Hierbei wurde gefunden, dass es vorteilhaft ist, dass die eingesetzten Siloxane selbst keine Alkoxylgruppen aufweisen, da dies aufgrund der Einsatzmenge zu einem hohen Anteil an alkoxylierten Produkten führen würde, der somit effektiv vermieden werden kann.

Dennoch konnte durch die Verwendung eines Emulgators, der vorzugsweise, wie weiter unten stehend, ein alkoxylierter Emulgator mit einem HLB-Wert (Hydrophilic-Lipophilic-Balance) von mindestens 9 ist, eine sehr gute Stabilität der einfach strukturierten und aus wenigen Komponenten bestehenden Imprägniercreme erzielt werden. Zwar wird durch die Alkoxylierung des vorzugsweise eingesetzten Emulgators eine gewisse Menge an Alkoxygruppen in die Imprägniercreme eingetragen, jedoch ist der Anteil an Emulgator üblicherweise deutlich geringer als der Anteil an Polydimethylsiloxan, so dass in Summe der Alkoxygruppenanteil in der Imprägniercreme selbst bei Verwendung eines alkoxylierten Emulgators gegenüber herkömmlichen Imprägniercremes reduziert ist. Die Verwendung eines alkoxylierten Emulgators ist besonders vorteilhaft, da sie zu einer besonders hohen Stabilität der Imprägniercreme führt und die erfindungsgemäß eingesetzten Polydimethylsiloxane dauerhaft stabil und homogen in der Imprägniercreme verteilt bleiben, was eine gleichmäßige Verteilung des Hydrophobierungsmittels Polydimethylsiloxan nach Applikation der Imprägniercreme auf einem zu hydrophobierenden Substrat bewirkt.

Ferner erfindungsgemäß ist die Imprägniercreme frei von Kohlenwasserstoffen, alkoxylierten Silanen, alkoxylierten Siloxanen und Amingruppen-funktionalisierten Siloxanen.

Unter "Kohlenwasserstoffen" werden dabei alle Arten von Kohlenwasserstoffen, aliphatische (geradkettig oder verzweigt) sowie aromatische Kohlenwasserstoffe verstanden. Diese umfassen insbesondere auch Paraffine und Isoparaffine, auf die erfindungsgemäße aus Gründen der besseren Stabilität der Imprägniercreme und vereinfachten Verarbeitung und Herstellbarkeit verzichtet wird.

"alkoxylierte Silane" sind dabei Silane, die eine oder mehrere Alkoxygruppen aufweisen, wie Alkylalkoxysilane, ethoxylierte Silane und dergleichen.

"alkoxylierte Siloxane" sind dabei Siloxane, die eine oder mehrere Alkoxygruppen aufweisen, wie Alkylalkoxysiloxane, ethoxylierte Dialkylsiloxane und dergleichen. Siloxane umfassen definitionsgemäß Polymere der Siloxane.

"Amingruppen-funktionalisierten Siloxanen" umfassen jegliche Siloxane mit einer oder mehreren Aminogruppen, wie z.B. Aminopropylgruppen-funktionalisierte Siloxane. Siloxane umfassen definitionsgemäß Polymere der Siloxane.

Durch den Verzicht auf die vorstehenden Rohstoffe, kann die Zusammensetzung der erfindungsgemäßen Imprägniercreme bei sehr guten hydrophobierenden Eigenschaften vereinfach werden. Zudem wird dadurch auch die Herstellung der Imprägniercreme erleichtert, wobei dennoch eine Imprägniercreme mit sehr guten Applikationseigenschaften, guter Standfestigkeit und Regenfestigkeit erhalten wird.

Zur weiteren Vereinfachung der Zusammensetzung der Imprägniercreme besteht diese aus Wasser, mindestens einem Emulgator und mindestens einem Polydimethylsiloxan, ausgewählt aus:

HO-(SiMe₂O)ₙ-H und Me₃SiO-(SiMe₂O)ₙ-SiMe₃,

wobei n eine ganze Zahl von 20 bis 2500 ist. Optional kann ferner mindestens ein Zuschlagstoff enthalten sein, wobei eine Gesamtmenge an den Zuschlagstoffen, bezogen auf die Gesamtmasse der Imprägniercreme weniger als 5 Masse% und insbesondere weniger als 3 Masse% beträgt. Werden mehrere Zuschlagstoffe in Kombination eingesetzt, so gelten die angegebenen Mengen für die Summe an allen Zuschlagstoffen.

Zuschlagstoffe im Sinne der vorliegenden Erfindung sind Hilfsstoffe, die die Wirkung der Imprägniercreme, also deren Hydrophobizität, nicht beeinträchtigen. Beispielhafte Hilfsstoffe umfassen Antioxidantien und Konservierungsmittel.

Wie vorstehend bereits beschrieben, ist der Emulgator vorzugsweise ein alkoxylierter Emulgator mit einem HLB-Wert von mindestens 9. Durch die Verwendung eines alkoxylierten Emulgators kann eine sehr gute Stabilität der einfach strukturierten und aus wenigen Komponenten bestehenden Imprägniercreme erzielt werden. Unter Stabilität ist die unveränderte, standfeste Konsistenz der Imprägniercreme nach langer Raumtemperaturlagerung zu verstehen, wonach eine Abtrennung einer flüssigen Phase nicht feststellbar ist. Die erfindungsgemäß eingesetzten Polydimethylsiloxane bleiben dauerhaft stabil und homogen in der Imprägniercreme verteilt, was eine gleichmäßige Verteilung des Hydrophobierungsmittels Polydimethylsiloxan nach Applikation der Imprägniercreme auf einem zu hydrophobierenden Substrat bewirkt.

Zur weiteren Verbesserung der Stabilität der Imprägniercreme weist der Emulgator vorzugsweise einen HLB-Wert von mindestens 10 und insbesondere von mindestens 12 auf. Je höher der HLB-Wert des Emulgators, desto hydrophiler ist der Emulgator. Obwohl sich das erfindungsgemäß verwendete Polydimethylsiloxan durch eine hohe Hydrophobizität auszeichnet, wurde festgestellt, dass, vermutlich durch die Bildung von starken Wasserstoffbrückenbildungen, ein das Polydimethylsiloxan sehr gut stabilisierendes "Netzwerk" in der Imprägniercreme erzeugt werden kann, so dass das Polydimethylsiloxan auch nach längerer Standzeit homogen in der Imprägniercreme verteilt bleibt und damit auch seine sehr guten Anwendungseigenschaften behält.

Als besonders effizienter Emulgator hat sich Isotridecylalkohol-polyglykolether mit einem HLB-Wert von 13 erwiesen, der auch als Polyethylenglycol-Monoalkylether oder Oligoethylenglycol-Monoalkylether unter der CAS-Nummer 9043-30-5 erhältlich ist.

Durch eine Reduzierung der Menge an Emulgator kann die Anwenderfreundlichkeit und Umweltfreundlichkeit der Imprägniercreme weiter verbessert werden. Insbesondere vorteilhaft beträgt eine Menge des Emulgators, bezogen auf die Gesamtmasse der Imprägniercreme 0,3 bis 3 Masse%, insbesondere 0,4 bis 2 Masse% und insbesondere 0,5 bis 1 Masse%. Werden zwei oder mehrere Emulgatoren in Kombination eingesetzt, so beziehen sich die hier angegebenen Mengen auf die Summe aller Emulgatoren. Bereits sehr geringe Mengen von 0,3 Masse% haben sich aufgrund der hohen Hydrophilie und alkoxylierten Struktur als wirkungsvoll zur Stabilisierung der Imprägniercreme herausgestellt. Ab Mengen oberhalb von 3 Masse% ist im Wesentlichen keine weitere Stabilitätssteigerung zu beobachten. Aus Gründen der Wirtschaftlichkeit, Anwenderfreundlichkeit und Umweltfreundlichkeit liegen die bevorzugten Mengen an Emulgator in einem Bereich von 0,4 bis 2 Masse% und insbesondere von 0,5 bis 1 Masse%.

Weiter vorteilhaft ist der Polymerisationsgrad n der oben dargestellten Polydimethylsiloxane eine ganze Zahl von 50 bis 1800. Hierdurch wird die Viskosität des Polydimethylsiloxans in einen sehr gut verarbeitbaren Bereich angehoben bzw. darauf begrenzt, so dass eine einfache Verarbeitung bei gleichzeitig hoher Standfestigkeit der Imprägniercreme erhalten wird.

Im Lichte der vorstehenden Vorteile liegt die Viskosität des bzw. der erfindungsgemäß eingesetzten Polydimethylsiloxane bei 25°C vorzugsweise in einem Bereich von 20 bis 350.000 mm²/s und insbesondere in einem Bereich von 50 bis 80.000 mm²/s. Ab einer Viskosität von mehr als 80.000 mm²/s kann die Verarbeitung des Polydimethylsiloxans verschlechtert sein, so dass es zu Inhomogenitäten und damit reduzierter Stabilität der Imprägniercreme kommen kann. Die Viskosität wird dabei gemäß ISO 3104 aus dem Jahr 2020 gemessen.

Zur Verbesserung der hydrophobierenden Wirkung der Imprägniercreme beträgt vorzugsweise eine Menge des Polydimethylsiloxans, bezogen auf die Gesamtmasse der Imprägniercreme 50 bis 92 Masse%, insbesondere 60 bis 90 Masse% und insbesondere 70 bis 88 Masse%. Werden mehrere Polydimethylsiloxane in Kombination eingesetzt, so beziehen sich die hier angegebenen Mengen auf die Summe aller Polydimethylsiloxane. Mengen an Polydimethylsiloxan oberhalb von 92 Masse% können zu einer schwierigeren Verarbeitbarkeit der Polydimethylsiloxane führen, während Mengen unterhalb von 50 Masse% eventuell mit einer reduzierten Hydrophobierungswirkung einhergehen.

Ebenfalls erfindungsgemäß wird auch ein Verfahren zur Herstellung einer wie vorstehend beschriebenen Imprägniercreme offenbart. Das Verfahren umfasst dabei einen Schritt des Mischens des Wassers und des mindestens einen Emulgators, bis eine homogene klare Mischung entstanden ist. Das Mischen kann einfach durch Schütteln oder durch Durchmischen mittels eines geeigneten Rührwerks erfolgen. Nach Erhalt einer homogenen Mischung erfolgt ein Einmischen des mindestens einen Polydimethylsiloxans bis eine homogene weißliche Creme entstanden ist. Insbesondere erfolgt das Einmischen unter Einwirkung von Scherkraft, z.B. unter Verwendung eines Rotor-Stator-Rührwerks. Eine weißliche Creme mit homogener Tröpfchenverteilung bildet sich bereits nach wenigen Minuten. Eine Einmischung für fünf Minuten bei einer Umdrehung des Rotor-Stator-Rührwerks von 15.000 Umdrehungen erzielt eine besonders standfeste weiße Creme, die sich durch eine hohe Hydrophobierungswirkung, gute Verarbeitbarkeit, Anwenderfreundlichkeit und Umweltfreundlichkeit auszeichnet. Die Imprägniercreme ist sofort nach ihrer Herstellung einsatzfähig und zeigt eine hohe Regenfestigkeit.

Ferner erfindungsgemäß wird auch die Verwendung der vorstehend offenbarten und hergestellten Imprägniercreme zur Imprägnierung von mineralischen Baustoffen und insbesondere von mineralischem Mauerwerk offenbart. Mineralische Baustoffe umfassen dabei insbesondere Beton, Ziegel und Sandstein. Aufgrund der sehr guten Hydrophobizität, leichten Verarbeitung und guten Applikationseigenschaften, können mineralische Baustoffe und insbesondere daraus hergestelltes Mauerwerk dauerhaft zuverlässig vor eindringendem oder aufsteigendem Wasser geschützt werden.

Die für die erfindungsgemäße Imprägniercreme beschriebenen Vorteile, vorteilhaften Effekte und Weiterbildungen finden auch Anwendung auf das erfindungsgemäße Verfahren zur Herstellung der Imprägniercreme sowie die Verwendung der Imprägniercreme.

### Beispiele

Im Nachfolgenden wird die vorliegende Erfindung unter Bezugnahme auf die Beispiele weiter beschrieben.

### Beispiele - Herstellung von Imprägniercremes

### Beispiel 1

In einen Mischbecher wurden 18,4 g Wasser und 0,8 g des Emulgators Isotridecylalkohol-polyglykolether eingewogen. Es wurde ca. 5 Minuten lang umgeschüttelt bis die Tropfen verschwunden waren und eine klare Flüssigkeit entstand.

Anschließend wurden 35,1 g eines hydroxyendständigen Polydimethylsiloxans mit einer Viskosität bei 25°C von ca. 50.000 mm²/s (etwaige Polydimethylsiloxane sind z.B. von der Firma Gelest erhältlich).

Die Mischung wurde mittels eines Rotor-Stator-Rührwerks der Fa. IKA 5 Minuten bei 15.000 Umdrehungen pro Minute homogenisiert. Es bildete sich eine dünnflüssige Milch.

Anschließend wurden weitere 36,3 g des Polydimethylsiloxans zugewogen und wiederum 5 Minuten bei 15.000 Umdrehungen pro Minute homogenisiert.

Die Konsistenz der Imprägniercreme wurde cremig, blieb jedoch noch fließfähig.

Abschließend wurden nochmals 34,6 g des Polydimethylsiloxans zugewogen und wiederum 5 Minuten bei 15.000 Umdrehungen pro Minuten homogenisiert.

Es resultierte eine standfeste, weißlich eingefärbte Creme. Nach einer 12-monatigen Raumtemperaturlagerung war keine Veränderung der standfesten Konsistenz feststellbar.

### Beispiel 2

Die Herstellungsweise des Beispiels 1 wurde wiederholt, wobei jedoch die Dosierung des Emulgators verdoppelt und das hydroxyendständige Polydimethylsiloxan mit einer Viskosität von 50.000 mm²/s durch ein hydroxyendständiges Polydimethylsiloxan mit einer niedrigeren Viskosität bei 25°C von 100 mm²/s ersetzt wurde.

Es resultierte wiederum eine standfeste, weißlich eingefärbte Creme. Nach einer 12-monatigen Raumtemperaturlagerung war keine Veränderung der standfesten Konsistenz feststellbar.

### Beispiel 3

Die Herstellungsweise von Beispiel 1 wurde nochmals wiederholt, wobei jedoch das hydroxyendständige Polydimethylsiloxan mit einer Viskosität von 50.000 mm²/s durch ein hydroxyendständiges Polydimethylsiloxan mit einer Viskosität bei 25°C von 5000 mm²/s ersetzt wurde.

Es resultierte eine standfeste, weißlich eingefärbte Creme. Nach einer 12-monatigen Raumtemperaturlagerung war keine Veränderung der standfesten Konsistenz feststellbar.

### Beispiel 4

Es wurde erneut eine Imprägniercreme wie in Beispiel 1 hergestellt, wobei jedoch das hydroxyendständige Polydimethylsiloxan mit einer Viskosität von 50.000 mm²/s durch ein trimethylsiloxy-endständiges Polydimethylsiloxan mit einer Viskosität bei 25°C von ca. 10.000 mm²/s ersetzt wurde.

Etwaige trimethylsiloxy-endständige Polydimethylsiloxane können von der Firma Thermo Fisher Scientific - Alfa Aesar bezogen werden.

Es resultierte erneut eine standfeste, weißlich eingefärbte Creme. Nach einer 12-monatigen Raumtemperaturlagerung war keine Veränderung der standfesten Konsistenz feststellbar.

### Beispiel 5

Die Herstellungsweise von Beispiel 4 wurde wiederholt, wobei jedoch das trimethylsiloxy-endständige Polydimethylsiloxan mit einer Viskosität von 10.000 mm²/s durch ein trimethylsiloxy-endständiges Polymer mit einer Viskosität bei 25°C von 50 mm²/s ersetzt wurde.

Es resultierte wiederum eine standfeste, weißlich eingefärbte Creme. Nach einer 12-monatigen Raumtemperaturlagerung war keine Veränderung der standfesten Konsistenz feststellbar.

### Beispiele - Anwendung der Imprägniercremes

### Beispiel A: Beschichtung von Ziegelsteinen

5 Ziegelsteine mit den Abmessungen 20,5 cm x 13,5 cm x 5,5 cm wurden mit den Imprägniercremes der Beispiele 1 bis 5 beschichtet.

Hierzu wurde jeweils in der Mitte einer Oberfläche eines Ziegelsteins (20,5 cm x 13,5 cm) ein Rechteck mit den Seitenlängen von 10 cm und 8 cm markiert, wobei die längere Seite des markierten Rechtecks parallel zur längeren Seite des Ziegelsteins ausgerichtet war.

In das markierte Rechteck wurden jeweils 10 g der Imprägniercremes der Beispiele 1 bis 5 aufgetragen.

Die Ziegelsteine waren vor dem Auftrag der Imprägniercremes 2 Tage auf der Bodenfläche (20,5 cm x 13,5 cm) in einer 1 cm hohen Wasserschicht gelagert. Auch nach dem Auftrag der Imprägniercremes wurde diese Wasserlagerung ohne Unterbrechung fortgesetzt.

Nach einer Lagerzeit von 2 bzw. 5 Wochen wurden die Ziegelsteine aus dem Wasserbad entnommen und in der Mitte mittels Hammer und Meißel in 2 Hälften zerteilt.

Auf die Bruchflächen wurden Wassertropfen aufpipettiert, um zu überprüfen, ob die Tropfen von der Oberfläche aufgesaugt werden oder ob sich Perlen bilden, die formbeständig sind und auch bei längerer Lagerung nicht aufgesaugt werden.

Eine mögliche Ausbildung der Wasserperlen sollte dabei als Nachweis dafür gelten, dass eine Hydrophobierung des inneren Bereichs des Ziegelsteins stattgefunden hatte.

Es stellte sich heraus, dass sich am oberen Rand, an dem die Beschichtung erfolgte, Perlen bildeten und dass darunter auf der gesamten Bruchfläche ein Verlauf und eine Aufsaugung des aufpipettierten Wassers erfolgte.

Die Breite des oberen Streifens, auf dem sich die Perlen bildeten, war bei den 5 Ziegeln unterschiedlich.

Die Breite des perlenbildenden, oberen Streifens hing von der Beschichtung mit der jeweiligen Creme der Beispiele 1 bis 5 und von der Dauer der Wasserlagerung wie folgt ab.

Nach einer zweiwöchigen Wasserlagerung ergaben sich folgende Ergebnisse:
Streifenbreite bei Beschichtung mit der Imprägniercreme des Beispiels 1: 5 mm.
Streifenbreite bei Beschichtung mit der Imprägniercreme des Beispiels 2: 10 mm.
Streifenbreite bei Beschichtung mit der Imprägniercreme des Beispiels 3: 5 mm.
Streifenbreite bei Beschichtung mit der Imprägniercreme des Beispiels 4: 3 mm.
Streifenbreite bei Beschichtung mit der Imprägniercreme des Beispiels 5: 15 mm.

Nach dieser Überprüfung wurde die Wasserlagerung mit jeweils einer Hälfte des zerteilten Ziegels fortgesetzt. Die jeweils andere Hälfte wurde trocken gelagert.

Nach einer zusätzlichen Wasserlagerung der jeweils einen Hälfte des zerteilten Ziegels von weiteren 3 Wochen wurde eine nochmalige Zerteilung vorgenommen und auf die jeweiligen Bruchflächen Wassertropfen aufpipettiert.

Es wurden folgende obere Streifenbreiten auf den Bruchflächen festgestellt, in denen sich Wasserperlen bildeten, wobei unterhalb dieser perlenbildenden Streifen das aufpipettierte Wasser wiederum sofort von der Ziegelsteinoberfläche aufgesaugt wurde.
Streifenbreite bei Beschichtung mit der Creme des Beispiels1: 10 mm
Streifenbreite bei Beschichtung mit der Creme des Beispiels 2: 15 mm
Streifenbreite bei Beschichtung mit der Creme des Beispiels 3: 10 mm
Streifenbreite bei Beschichtung mit der Creme des Beispiels 4:10 mm
Streifenbreite bei Beschichtung mit der Creme des Beispiels 5: 30 mm
Nach weiteren 6 Monaten Wasser- oder Trockenlagerung ergab sich das Ergebnis, dass die Abmessungen der perlenbildenden Streifen sowohl nach Trockenlagerung als auch nach Wasserlagerung unverändert geblieben waren.

Aus diesen Ergebnissen lässt sich schließen, dass durch die Beschichtung der Ziegel mit den Polydimethylsiloxan-Imprägniercremes der vorliegenden Erfindung eine wasserabweisende Wirkung in den Randzonen erzielt wurde.

### Beispiel B - Beschichtung von Betonhohlblocksteinen

Es wurden würfelförmige Hohlblocksteine mit einer Kantenlänge von 19 cm für die Beschichtung mit den Imprägniercremes der Beispiele 1 bis 5 verwendet.

Vier der sechs Seitenflächen waren mit einer 3,5 cm starken Betonwandung verschlossen, zwei gegenüberliegende Seitenflächen waren offen.

Die Betonhohlblocksteine wurde unter Auflage auf einer der vier Betonwände in Wasser gelagert. Die Wasserhöhe betrug 1 cm, die Dauer der Wasserlagerung betrug 2 Tage. Der jeweilige Hohlblockstein war somit mit einer Grundplatte und mit den zwei gegenüberliegenden Seitenwänden 1 cm in Wasser eingetaucht. Die obere Deckplatte war trocken.

Es erfolgte eine von unten fortschreitende Dunkelfärbung der senkrechten Seitenwände bis zu einer Höhe von ca. 12 cm.

Nach der 2-tägigen Wasserlagerung wurde jeweils die obere Deckplatte in einer Streifenbreite von 6 cm mit den Imprägniercremes der Beispiele 1 bis 5 beschichtet.

Der rechteckige Beschichtungsstreifen mit den Seitenlängen von 19 und 6 cm befand sich am Rand der oberen Deckplatte direkt über einer darunterliegenden Seitenwand. Die Auftragsmenge der Imprägniercremes betrug jeweils ca. 35 g.

Anschließend wurde die Wasserlagerung fortgesetzt. Nach einer Lagerzeit von 6 Monaten wurde der jeweilige Hohlblockstein aus dem Wasserbad entfernt und auf die ursprüngliche Dunkelfärbung der senkrechten Seitenwände hin begutachtet.

Es stellte sich heraus, dass sich die von unten hochgestiegene Dunkelfärbung der Seitenwand, die sich unmittelbar unter dem Beschichtungsstreifen befand, von einer Höhe von 12 cm auf eine Höhe von 4 cm nach unten verringert hatte.

Zudem war eine weitere Dunkelfärbung festzustellen, die sich von oben, wo die Beschichtung der Deckplatte erfolgte, bis zu einer Seitenwandhöhe von 8 cm nach unten erstreckte, Die gesamte Seitenwand war von oben bis zu einer Wandhöhe von 8 cm nachgedunkelt.

Die andere, gegenüberliegende Seitenwand war unverändert nur von unten bis zu einer Höhe von 12 cm dunkel gefärbt.

Aus diesem Ergebnis konnte gefolgert werden, dass die untere Dunkelfärbung durch hochsteigendes Wasser verursacht wurde und die obere Dunkelfärbung durch die darüber aufgetragene Imprägniercreme verursacht wurde.

Zur Überprüfung der Dunkelfärbungen wurden die beiden senkrechten Seitenwände mit Hammer und Meißel aus dem Hohlblockstein herausgebrochen. Auf die Bruchflächen wurden mit einer Pipette Wassertropfen aufgetragen.

Dabei ergab sich, dass Wassertropfen, die auf die untere Dunkelfärbung aufpipettiert wurden, sofort aufgesaugt wurden und dass im Gegensatz dazu Wassertropfen, die auf die obere Dunkelfärbung aufpipettiert wurden, Wasserperlen bildeten.

Aus diesen Ergebnissen lässt sich schließen, dass die Imprägniercremes in den Betonkörper eindringen und eine wasserabweisende Wirkung verursachen.

## Patentansprüche

1. Imprägniercreme enthaltend:
- Wasser,
- mindestens einen Emulgator und
- mindestens ein Polydimethylsiloxan, ausgewählt aus:
HO-(SiMe₂O)ₙ-H und Me₃SiO-(SiMe₂O)ₙ-SiMe₃, wobei n eine ganze Zahl von 20 bis 2500 ist,
wobei die Imprägniercreme frei ist von Kohlenwasserstoffen, alkoxylierten Silanen, alkoxylierten Siloxanen und Amingruppen-funktionalisierten Siloxanen.

2. Imprägniercreme nach Anspruch 1, bestehend aus:
- Wasser,
- mindestens einem Emulgator und
- mindestens einem Polydimethylsiloxan, ausgewählt aus:
HO-(SiMe₂O)ₙ-H und Me₃SiO-(SiMe₂O)ₙ-SiMe₃, wobei n eine ganze Zahl von 20 bis 2500 ist,
und optional mindestens einem Zuschlagstoff, wobei eine Gesamtmenge der Zuschlagstoffe, bezogen auf die Gesamtmasse der Imprägniercreme weniger als 5 Masse% und insbesondere weniger als 3 Masse% beträgt.

3. Imprägniercreme nach Anspruch 1 oder 2, wobei der Emulgator ein alkoxylierter Emulgator mit einem HLB-Wert von mindestens 9 ist.

4. Imprägniercreme nach einem der vorhergehenden Ansprüche, wobei der Emulgator einen HLB-Wert von mindestens 10 und insbesondere von mindestens 12 aufweist.

5. Imprägniercreme nach einem der vorhergehenden Ansprüche, wobei der Emulgator Isotridecylalkohol-polyglykolether ist.

6. Imprägniercreme nach einem der vorhergehenden Ansprüche, wobei eine Menge des Emulgators, bezogen auf die Gesamtmasse der Imprägniercreme 0,3 bis 3 Masse%, insbesondere 0,4 bis 2 Masse% und insbesondere 0,5 bis 1 Masse% beträgt.

7. Imprägniercreme nach einem der vorhergehenden Ansprüche, wobei n in den in Anspruch 1 dargestellten Formeln eine ganze Zahl von 50 bis 1800 ist.

8. Imprägniercreme nach einem der vorhergehenden Ansprüche, wobei die Viskosität des Polydimethylsiloxans bei 25°C in einem Bereich von 20 bis 350.000 mm²/s und insbesondere in einem Bereich von 50 bis 80.000 mm²/s liegt.

9. Imprägniercreme nach einem der vorhergehenden Ansprüche, wobei eine Menge des Polydimethylsiloxans, bezogen auf die Gesamtmasse der Imprägniercreme 50 bis 92 Masse%, insbesondere 60 bis 90 Masse% und insbesondere 70 bis 88 Masse% beträgt.

10. Verfahren zur Herstellung einer Imprägniercreme nach einem der vorhergehenden Ansprüche, umfassend die Schritte:
- Mischen des Wassers und des mindestens einen Emulgators, bis eine homogene Mischung entstanden ist und
- Einmischen des mindestens einen Polydimethylsiloxans in die homogene Mischung bis eine homogene weißliche Creme entstanden ist.

11. Verwendung der Imprägniercreme nach einem der Ansprüche 1 bis 9 zur Imprägnierung von mineralischen Baustoffen und insbesondere von mineralischem Mauerwerk.

## Claims

1. An impregnation cream comprising:
- water,
- at least one emulsifier and
- at least one polydimethylsiloxane selected from:
HO-(SiMe₂O)ₙ-H and Me₃SiO-(SiMe₂O)ₙ-SiMe₃, wherein n is an integer from 20 to 2500,
wherein the impregnation cream being free from hydrocarbons, alkoxylated silanes, alkoxylated siloxanes and amine group-functionalized siloxanes.

2. The impregnation cream of claim 1, consisting of:
- water,
- at least one emulsifier and
- at least one polydimethylsiloxane selected from:
HO-(SiMe₂O)ₙ-H and Me₃SiO-(SiMe₂O)ₙ-SiMe₃, wherein n is an integer from 20 to 2500,
and optionally at least one additive, a total amount of the additives, based on the total mass of the impregnation cream, being less than 5% by mass and preferably less than 3 mass%.

3. The impregnation cream of claim 1 or 2, wherein the emulsifier is an alkoxylated emulsifier having an HLB value of at least 9.

4. The impregnation cream of any of preceding claims, wherein the emulsifier has an HLB value of at least 10 and preferably at least 12.

5. The impregnation cream of any of preceding claims, wherein the emulsifier is isotridecyl alcohol polyglycol ether.

6. The impregnation cream of any of preceding claims, wherein an amount of the emulsifier, based on the total mass of the impregnation cream, is 0.3 to 3 mass %, preferably 0.4 to 2 mass % and preferably 0.5 to 1 mass %.

7. The impregnation cream of any of preceding claims, wherein n in the formulae shown in claim 1 is an integer from 50 to 1800.

8. The impregnation cream of any of preceding claims, wherein the viscosity of the polydimethylsiloxane at 25° C is in a range from 20 to 350,000 mm²/s and preferably in a region of 50 to 80,000 mm²/s.

9. The impregnation cream of any of preceding claims, wherein a proportion of the polydimethylsiloxane, based on the total mass of the impregnation cream, is 50 to 92 mass %, preferably 60 to 90 % by mass and preferably 70 to 88 % by mass.

10. A method for preparing an impregnation cream of any of preceding claims, comprising the steps of:
- mixing the water and the at least one emulsifier until a homogeneous mixture is formed; and
- admixing the at least one polydimethylsiloxane into the homogeneous mixture until a homogeneous whitish-colored cream is formed.

11. Use of the impregnation cream of any of claims 1 to 9 to impregnate mineral building materials and preferably mineral masonry.

## Revendications

1. Crème d'imprégnation contenant :
- de l'eau,
- au moins un émulsifiant et
- au moins un polydiméthylsiloxane sélectionné parmi :
HO-(SiMe₂O)ₙ-H et Me₃SiO-(SiMe₂O)ₙ-SiMe₃, dans laquelle n est un nombre entier de 20 à 2500,
dans laquelle la crème d'imprégnation est exempte d'hydrocarbures, de silanes alcoxylés, de siloxanes alcoxylés et de siloxanes fonctionnalisés avec des groupes amines.

2. Crème d'imprégnation selon la revendication 1 composée de :
- eau,
- au moins un émulsifiant et
- au moins un polydiméthylsiloxane sélectionné parmi :
HO-(SiMe₂O)ₙ-H et Me₃SiO-(SiMe₂O)ₙ-SiMe₃, dans laquelle n est un nombre entier de 20 à 2500,
et en option au moins un granulat, dans laquelle une quantité globale des granulats s'élève par rapport à la masse globale de la crème d'imprégnation à moins de 5 % en masse et en particulier à moins de 3 % en masse.

3. Crème d'imprégnation selon la revendication 1 ou 2, dans laquelle l'émulsifiant est un émulsifiant alcoxylé avec une valeur HLB d'au moins 9.

4. Crème d'imprégnation selon l'une quelconque des revendications précédentes, dans laquelle l'émulsifiant présente une valeur HLB d'au moins 10 et en particulier d'au moins 12.

5. Crème d'imprégnation selon l'une quelconque des revendications précédentes, dans laquelle l'émulsifiant est un alcool isotridécylique-éther polyglycolique.

6. Crème d'imprégnation selon l'une quelconque des revendications précédentes, dans laquelle une quantité de l'émulsifiant est comprise par rapport à la masse globale de la crème d'imprégnation entre 0,3 et 3 % en masse, en particulier entre 0,4 et 2 % en masse et en particulier entre 0,5 et 1 % en masse.

7. Crème d'imprégnation selon l'une quelconque des revendications précédentes, dans laquelle n dans les formules représentées dans la revendication 1 est un nombre entier de 50 à 1800.

8. Crème d'imprégnation selon l'une quelconque des revendications précédentes, dans laquelle la viscosité du polydiméthylsiloxane à 25 °C est dans une plage de 20 à 350 000 mm²/s et en particulier dans une plage de 50 à 80 000 mm²/s.

9. Crème d'imprégnation selon l'une quelconque des revendications précédentes, dans laquelle une quantité du polydiméthylsiloxane est comprise par rapport à la masse globale de la crème d'imprégnation entre 50 et 92 % en masse, en particulier entre 60 et 90 % en masse et en particulier entre 70 et 88 % en masse.

10. Procédé de fabrication d'une crème d'imprégnation selon l'une quelconque des revendications précédentes, comprenant les étapes suivantes :
- le mélange de l'eau et de l'au moins un émulsifiant jusqu'à l'apparition d'un mélange homogène et
- l'incorporation de l'au moins un polydiméthylsiloxane dans le mélange homogène jusqu'à l'apparition d'une crème blanchâtre homogène.

11. Utilisation de la crème d'imprégnation selon l'une quelconque des revendications 1 à 9 pour l'imprégnation de matériaux de construction minéraux et en particulier de maçonnerie minérale.
